# EUROPEAN PATENT SPECIFICATION

(11) **EP 4 655 998 B1**
(45) Date of publication and mention of the grant of the patent: **28.10.2026**
(21) Application number: 23705388.9
(22) Date of filing: 15.02.2023
(51) Int. Cl.: H04W 72/27, H04W 72/20, H04W 72/21

(54) **AN ACCESS POINT FOR A WIRELESS COMMUNICATION NETWORK AND A METHOD OF OPERATING AN ACCESS POINT FOR A WIRELESS COMMUNICATION NETWORK**
ZUGANGSPUNKT FÜR EIN DRAHTLOSKOMMUNIKATIONSNETZWERK UND VERFAHREN ZUM BETRIEB EINES ZUGANGSPUNKTS FÜR EIN DRAHTLOSKOMMUNIKATIONSNETZWERK
POINT D'ACCÈS POUR UN RÉSEAU DE COMMUNICATION SANS FIL ET PROCÉDÉ DE FONCTIONNEMENT D'UN POINT D'ACCÈS POUR UN RÉSEAU DE COMMUNICATION SANS FIL

(43) Date of publication of application: 03.12.2025
(73) Proprietor: Huawei Technologies Co., Ltd., Shenzhen, Guangdong 518129 (CN)
(72) Inventor: TSILIMANTOS, Dimitrios, 80992 Munich (DE); GIANNAKAS, Theodoros, 80992 Munich (DE)
(74) Representative: Roth, Sebastian
(86) International application number: PCT/EP2023/053690
(87) International publication number: WO 2024/170069

(56) References cited:
- WO-A1-2022/218516

## Description

### TECHNICAL FIELD

Generally, the present disclosure relates to resource allocation in wireless communication networks. More specifically, the present disclosure relates to an access point for a wireless communication network and to a method of operating an access point for a wireless communication network.

### BACKGROUND

Radio resource allocation is a key aspect of wireless networks, such as cellular networks. In the advent of 6G wireless networks and beyond, it is expected to have a large number of devices connected to each access point (AP) of the network. In such a setting, radio resource allocation will become an increasingly challenging task.

The current practice is as follows: Each AP collects state information of its connected devices and then solves an optimization problem in order to decide how to allocate radio resources, e.g., transmission power, subcarrier frequency and beam selection. Thereby, the AP ignores the rest of the network (e.g., other APs and their actions). While this approach is scalable, as it does not require any additional communication between devices, following this approach can lead to strong interferences caused by devices that belong to nearby APs. These interferences can have a significant negative impact on the overall network performance.

An alternative and opposite approach is to handle the APs actions centrally by a master entity which would need to (a) collect the bulky information from all APs, (b) solve an even more challenging large-scale optimization problem, and finally (c) send back to each AP the respective radio resource allocation decisions. This approach, is not practical as it requires a huge communication overhead and may also lead to a significant increase in latency.

Thus, it would be advantageous if the radio resource allocation in the next generation of communication network architectures is more flexible and requires less resources than the conventional approaches mentioned above.

WO 2022/218516 A1 relates to a wireless terminal comprising a communication interface for transmitting data to an access point and processing circuitry configured to select data transmission configurations based on a global transmission policy and transmission state information, to determine rewards for the selected configurations, to adjust a local transmission policy accordingly, and to exchange information on the adjusted local transmission policy with further wireless terminals for adapting the global transmission policy.

### SUMMARY

In view of the above, this disclosure aims to provide an improved access point for a wireless communication network and an improved method of operating an access point for a wireless communication network, which overcome the above mentioned limitations and disadvantages.

These and other objectives are achieved by the solution of this disclosure as described in the independent claims. Advantageous implementations are further defined in the dependent claims.

A first aspect of this disclosure provides an access point for a wireless communication network. The access point comprises a first interface configured to receive first information from at least one communication device in the wireless communication network; a second interface configured to receive second information from at least one further access point in the wireless communication network; and a number M of selectable policy modules, each of the selectable policy modules being configured to calculate a resource allocation decision. The M selectable policy modules comprise: a first policy module which is configured to calculate the resource allocation decision based on the received first information without requiring the second information, and at least a second policy module which is configured to calculate the resource allocation decision based on the received first information and on the received second information. The access point further comprises a controller which is configured to select a policy module from the M selectable policy modules to calculate the resource allocation decision.

This provides the advantage that the access point can carry out the resource allocation adaptive to a dynamic environment of the wireless network. For example, the access point can select a policy module that is the most suitable for the current network conditions and can thereby avoid unnecessary data exchange, thus, reducing communication costs.

For example, the access point is configured to subsequently carry out the calculated resource allocation decision.

The resource allocation decision can be a scheduling decision. The scheduling decision can comprise the decision which of the communication devices in the network communicates with the access point for a certain (scheduled) time-step or timeslot.

The access point can be a base station or an agent of the wireless communication network.

The communication device can be any device in the network that is wirelessly connected to the access point, for example, a user equipment (UE) such as a smartphone.

The wireless communication network can be a cellular network.

The first and/or the second interfaces can be respective wireless interfaces.

The first information can comprise information on a state of the at least one communication device, e.g., buffer sizes and/or channels used by the at least one communication device. For example, the first information can be local information from a communication device which communicates directly with the access point.

The second information can comprise information on a state of the at least one further access point and/or of the communication devices which are connected to the further access point. For example, the second information can comprise neighboring information from any number of further access points in the communication network.

The at least one further access point in the wireless communication network can be essentially identical to the access point, i.e., it can comprise the same features and calculate its own resource allocation decision.

In an implementation form of the first aspect, the controller is configured to select the policy module from the M selectable policy modules based on the received first information. This achieves the advantage that a suitable policy module for the current environment of the wireless network can be selected.

In an implementation form of the first aspect, the controller is configured to broadcast a message with the selection of the policy module to one, more or all further access points in the wireless communication network. This achieves the advantage of ensuring that the necessary information is shared among access points.

In an implementation form of the first aspect, the second information comprises a response by the at least one further access point in the wireless communication network to the broadcasted message.

In an implementation form of the first aspect, the second interface is further configured to receive a broadcasted message on a selection of a policy module from at least one further access point in the wireless communication network.

For instance, the access point can then respond to the received broadcasted message and send its first received information to the at least one further access point and help the one of the at least one further access points take a better resource allocation decision.

In an implementation form of the first aspect, the access point is configured to send further information back to the at least one further access point in response to the receipt of the broadcasted message.

Preferably, the access point is configured to only send the further information back if the further access point requires this information due to its policy selection. Thus, a distributed resource management can be realized, where the access point(s) only exchange necessary information, thus, reducing the amount of transmitted data to a necessary minimum.

For example, the further information can be "second information" for the further access point. The further information could comprise first information that was previously received by the access point.

In an implementation form of the first aspect, the controller is a trainable controller which is trainable with regard to the selection of the policy module.

For example, the controller of each access point in the communication network can be trained based on the specific traffic and channel characteristics of its associated communication devices. The controllers of each access point in the network can be trained independent of each other, e.g., concurrently.

In an implementation form of the first aspect, after carrying out the calculated resource allocation decision, the first interface is configured to receive a reward feedback from at least one communication device in the wireless communication network, and/or the second interface is configured to receive a reward feedback or an accumulation of reward feedbacks from at least one further access point in the wireless communication network. This achieves the advantage that feedback on the resource allocation is provided, e.g., for training and/or adapting elements of the access point, e.g., its controller.

A reward feedback can comprise feedback on a current performance of a communication device and/or an access point, e.g. a rate of communication or a utilization of a communication channel.

For instance, a communication channel between two or more access points can be used for exchanging messages on the selection of policy modules, second information (e.g., in response to such a message), and reward feedback.

In an implementation form of the first aspect, the controller comprises a trainable neural network. For example, the trainable neural network can be configured to select the policy module.

In an implementation form of the first aspect, the controller is configured to train the trainable neural network by: calculating a global reward based on the reward feedback from the at least one communication device and the reward feedback(s) from the at least one further access point, for example, using a Monte-Carlo simulation, feeding the global reward to a loss function, and adjusting the trainable neural network based on the result of the loss function.

For example, weights of the trainable neural network are adjusted based on the result of the loss function. This training of the neural network of the controller can be carried out in regular time intervals.

In an implementation form of the first aspect, each of the selectable policy modules comprises a set of rules, for example, an algorithm, which is stored in a memory of the access point.

The selectable policy modules, especially their respective set of rules or algorithm, can be configured to be executed by a processor of the access point in order to calculate the respective resource allocation decision.

In an implementation form of the first aspect, the controller, for example a neural network of the controller, is further configured to adjust the rules of at least one of the M selectable policy modules in certain time intervals.

Said adjustment can be carried out as a result of the above training. For example, the neural network of the controller can be trainable with regard to the selection decision and/or the adjustment of the policy modules.

In an implementation form of the first aspect, each of the selectable policy modules comprises a respective further trainable neural network.

For example, the trainable neural network (of the controller) and/or the further trainable neural networks (of the policy modules) can be fully connected neural networks (FCNN), i.e., neural networks that comprise fully connected layers.

In an implementation form of the first aspect, the further trainable neural networks of the selectable policy modules are configured to be trained separately one by one, by calculating an individual loss for each further trainable neural network, and adjusting the respective further trainable neural network based on the individual loss.

The individual losses can be calculated with an individual loss function for each selectable policy module.

In an implementation form of the first aspect, the further trainable neural networks of the selectable policy modules are configured to be trained jointly together with the trainable neural network of the controller, by calculating a joint loss of the trainable neural network of the controller and the further trainable neural networks of the selectable policy modules, and adjusting the trainable neural network and the further trainable neural networks based on the joint loss.

For example, the joint loss can be calculated as a sum of individual loss functions for each selectable policy module, wherein each loss function is weighted according to a probability that the respective policy module is selected by the controller.

A second aspect of this disclosure provides a system comprising at least two access points of the first aspect of the disclosure.

Each of the at least two access points of the system can be configured to receive first information from at least one respective communication device in the wireless communication network and to receive second information from a respective other access point of the at least two access points.

The access points of the system can exchange different types of messages. For instance, the controller of a first access point in the system broadcasts its policy module selection to the other access point(s) of the system. On the receiving end, the other access point(s) can translate this received message, and send back a predefined (pre-agreed) level of information (e.g., in the form of second information) back to the first access point. This can be performed by all access points in the system. Moreover, the controller actions of each access point can determine the policy modules that are used by the access point, and consequently this can drive a level of information that is exchanged between the access points of the system. Thereby, environmental conditions (e.g. intensity of arrivals, channel gains) can determine when the access points exchange such messages. Thus, in an isolated environment, a change of the environmental conditions (e.g. bad channels and/or large queues), can cause an observable increase of signalling between the access points.

A third aspect of this disclosure provides a method of operating an access point for a wireless communication network. The method comprising the steps of: receiving first information from at least one communication device in the wireless communication network; selecting a policy module from a number M of selectable policy modules, each of the selectable policy modules being configured to calculate a resource allocation decision; broadcasting a message on the policy module selection to at least one further access point in the wireless communication network; depending on the selected policy module, receiving second information from the at least one further access point; wherein the M selectable policy modules comprise: a first policy module which is configured to calculate the resource allocation decision based on the received first information without requiring the second information, and at least a second policy module which is configured to calculate the resource allocation decision based on the received first information and on the received second information. The method further comprises the step of calculating the resource allocation decision with the selected policy module.

For example, the step of receiving second information from the at least one further access point does not always take place. This step is conditional on the policy module selection, e.g., the second information is only forwarded by the at least one further access point if required by the selected policy module. This achieves the advantage that second information (which can be heavy in bits) is exchanged only if needed.

The method according to the third aspect of this disclosure can be carried out by the access point according to the first aspect of this disclosure.

The above description with regard to the access point according to the first aspect of the disclosure and the system according to the second aspect of the disclosure is correspondingly valid for the method according to the third aspect of the disclosure.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms will be explained in the following description of specific embodiments in relation to the enclosed drawings, in which
- FIG. 1: shows a schematic diagram of an access point for a wireless communication network according to an embodiment of this disclosure;
- FIG. 2: shows a schematic diagram of a system comprising access points according to an embodiment of this disclosure;
- FIG. 3: shows a schematic diagram of a system comprising access points according to an embodiment of this disclosure;
- FIG. 4: shows a result of a performance evaluation according to an embodiment of this disclosure;
- FIG. 5: shows a flow diagram of a method of operating an access point for a wireless communication network according to an embodiment of this disclosure; and
- FIG. 6: shows a flow diagram of a method of operating an access point for a wireless communication network according to an embodiment of this disclosure.

### DETAILED DESCRIPTION OF EMBODIMENTS

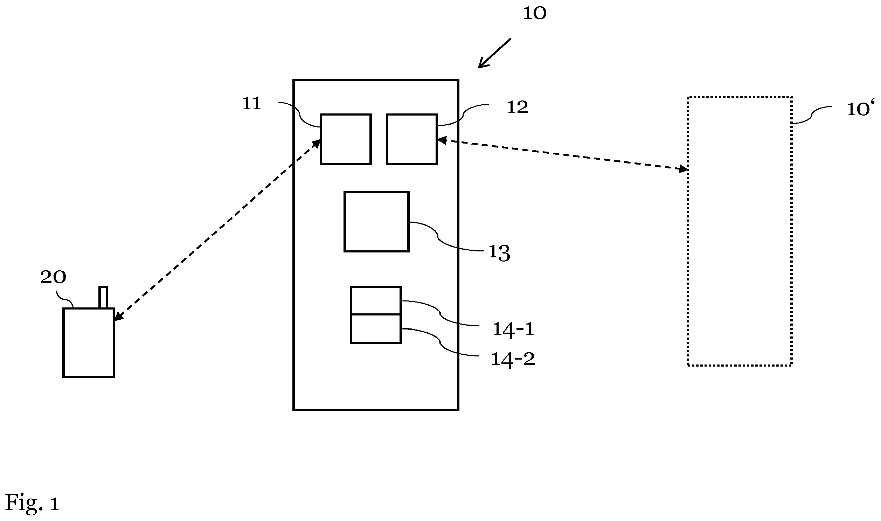

FIG. 1 shows a schematic diagram of an access point 10 for a wireless communication network according to an embodiment of this disclosure.

The access point 10 comprises a first interface 11 configured to receive first information from at least one communication device 20 in the wireless communication network, a second interface 12 configured to receive second information from at least one further access point 10' in the wireless communication network, and a number M of selectable policy modules 14-1, 14-2, each of the selectable policy modules 14-1, 14-2 being configured to calculate a resource allocation decision. The M selectable policy modules 14-1, 14-2 comprise: a first policy module 14-1 which is configured to calculate the resource allocation decision based on the received first information without requiring the second information, and at least a second policy module 14-2 which is configured to calculate the resource allocation decision based on the received first information and on the received second information. The access point 10 further comprises a controller 13 which is configured to select a policy module from the M selectable policy modules 14-1, 14-2 to calculate the resource allocation decision.

For example, the access point 10 is configured to subsequently carry out the calculated resource allocation decision.

For instance, in the case of M=2, two selectable policy modules (a first 14-1 and a second 14-2) can be selected to calculate the resource allocation decision. However, the number of selectable policy modules can be larger (M>2). The two policy modules 14-1, 14-2 in FIG. 1 are only shown as an example.

The resource allocation decision can be a scheduling decision. The scheduling decision can comprise the decision which of the communication devices in the network communicates with the access point for a certain (scheduled) time-step or timeslot. The resource allocation decision can further comprise a decision on an allocation of radio resources, such as transmission power, subcarrier frequency and/or beam selection.

The access point 10 can be a base station or an agent of the wireless communication network.

The communication device 20 can be any device in the network that is wirelessly connected to the access point 10, for example, a user equipment (UE) such as a smartphone.

The first and/or the second interfaces 11, 12 can be respective wireless interfaces.

Each of the M selectable policy modules 14-1, 14-2 can be optimized for specific conditions, wherein the second policy module(s) 14-2 may require a data exchange (e.g., observed states) from the further access point(s) 10' of the communication network to calculate the resource allocation.

For example, the M selectable policy modules can comprise further policy modules. The further policy modules can comprise further "second policy modules", i.e., policy modules which are configured to calculate the resource allocation decision based on received first and second information. The second information used by each of these second policy modules may be information from a respective subset of the further access points in the wireless communication network. For instance, each of the M selectable policy modules performs better on a given set of conditions.

For instance, each selectable policy module 14-1, 14-2 may comprise a set of rules, for example, an algorithm, which is stored in a memory of the access point. The selectable policy modules 14-1, 14-2, especially their respective set of rules or algorithm, can be configured to be executed by a processor of the access point 10 in order to calculate the respective resource allocation decision.

The at least one further access point 10', which is depicted by a dashed square in FIG. 1, can be essentially identical to the access point 10, i.e., it can comprise the same features and calculate its own resource allocation decision by means of a selected policy module. The access points 10, 10' in the wireless communication network can communicate via their respective second interfaces 12, e.g. to exchange second information(s).

The controller 13 can be configured to select the policy module 14-1, 14-2 that should be deployed for a given first information. For instance, the controller 13 can comprise a processor which is configured to carry out said selection.

The controller 13 can be configured to select the policy module from the M selectable policy modules based on the received first information, e.g., based on information from a communication device 20 directly communicating its status to the access point 10.

The controller can further be configured to broadcast a message with the selection of the policy module to one, more or all further access points 10' in the wireless communication network.

The broadcast of the message with the policy module selection may trigger additional signaling, as the selected policy module may require additional (second) information from at least one further access point 10'. For example, the further access point 10' can react to the receipt of this broadcast by forwarding the second information to the access point 10. The further access point 10' may forward the second information if the broadcast indicates that this second information is required, e.g., by the second policy module.

For instance, the (second) policy module calculates the resource allocation decision after receiving the second information (in response to the broadcasted message with the policy module selection).

Likewise, the second interface 12 can be configured to receive a broadcasted message on a selection of a policy module from the further access point 10' and can respond to said message by sending further (second) information back to the further access point 10'.

The controller 13 can be a trainable controller which is trainable with regard to the selection of the policy module. For example, the controller 13 learns to choose the policy module from the M selectable policy modules which is optimal, i.e. provides the best resource allocation decision, for a given set of conditions. Thus, in the particular case where the resource allocation decision is a scheduling decision, the controller 13 can be configured to perform a "meta-scheduling", i.e., it can choose which policy module 14-1, 14-2 will take the scheduling decisions, for instance, based on reinforcement learning (RL). As such, the controller 13 can comprise a trainable neural network, e.g. a fully connected neural network (FCNN).

For instance, the communication between the access points 10 in the communication network is not fixed. The controller 13 of each access point can regulate the amount of information exchange between the access points 10, depending on the current network conditions. In this way, the controller 13 can control the communication (information exchange) between the access points 10, 10'.

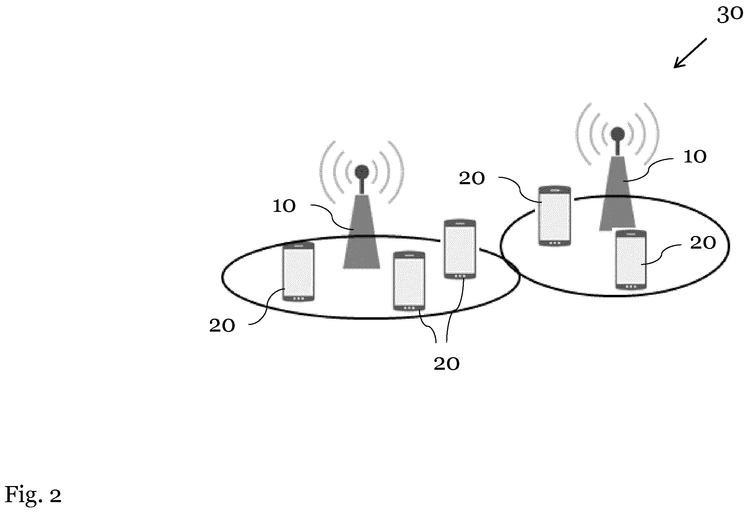

FIG. 2 shows a schematic diagram of a system 30 comprising a plurality of access points 10 for the wireless communication network according to an embodiment of this disclosure. Each access point 10 of the system 30 shown in FIG. 2 can be an access point 10 as shown in FIG. 1. The wireless communication network can be a cellular network.

The access points 10 can each directly communicate with a number of communication devices 20 in an environment (depicted by a circle around each access point 10). This communication can be carried out via the respective first interfaces 11 of the access points 10 and can comprise the receipt of first information from the devices 10 in the respective environment. The access points 10 can further communicate with each other, e.g. exchange second information, via their respective second interfaces 12.

In this way, a system 30 for efficient decentralized radio resource allocation in a wireless network with controllable information exchange between access points 10 can be provided.

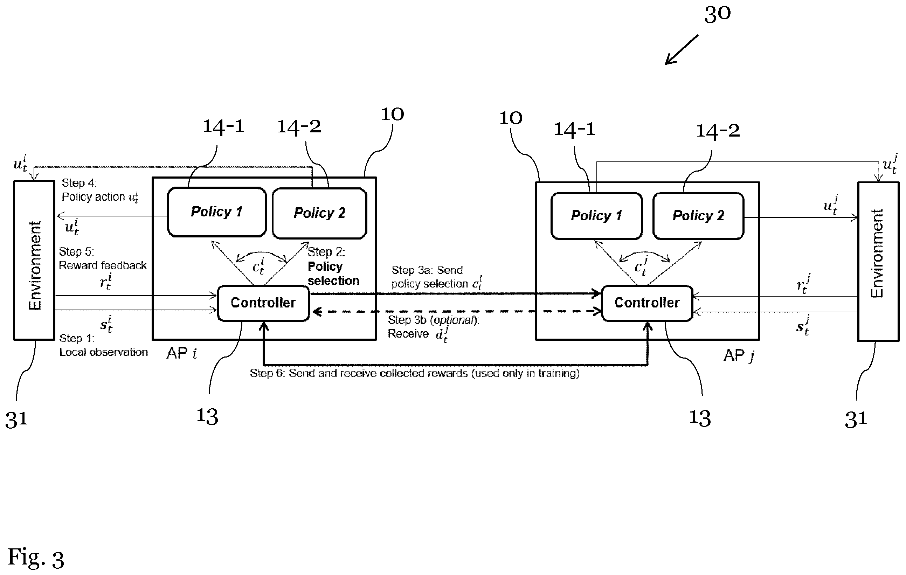

FIG. 3 shows a further schematic diagram of the system 30 comprising a plurality of access points 10 according to an embodiment of this disclosure. Each access point 10 of the system 30 shown in FIG. 3 can be an access point 10 as shown in FIG. 1.

Although the schematic system architectures in FIGS. 2 and 3 only shows two access points 10 of the system 30, the system 30 could comprise any number of access points 10 for the wireless communication network.

In the following, the two access points (APs) 10 in FIG. 3 are referred to as APi and APj. Each of APi and APj comprises at least two policy modules 14-1, 14-2 (also referred to as: Policy 1 and Policy 2). Each of APi and APj can be connected to a number of communication devices 20 in their respective environment 31.

An example implementation of the policy modules 14-1, 14-2 could be a distinction of the M policy modules based on the amount and/or type of information they require in order to make the resource allocation decision.

For example, if ${s}_{t}^{i}$ is a vector encoding the state of the communication devices 20 covered by APi (e.g., devices in the environment 31), the selectable policy modules can comprise the following M=2 policies:
- Policy 1: a block that receives as input ${s}_{t}^{i}$ (first information, also referred to as local information) and computes (returns) a resource allocation; and
- Policy 2: a block that receives as input ${s}_{t}^{i}$ (first information) and ${s}_{j}^{i}$ (second information, also referred to as neighboring information, with *j* ∈ *Nᵢ,* and *Nᵢ* the set of APs being 1-hop away of APi) and computes (returns) a resource allocation.

The trainable controller 13 of APi can be configured to act based on the received first information ${s}_{t}^{i}$ (input). Essentially the action of this block can be an integer *m* (with *m* = 1, ... *,M*) indicating which policy block will be chosen to take the resource allocation decision. Additionally, the selected action of the controller 13 of APi can be communicated to neighboring APs, since this decision may trigger information exchange between the APs.

In the following, "resource allocation decision" refers to the resource allocation decision taken by one of the M policy modules; and "action" refers to the policy module m selection by the controller.

A signaling between the APs 10 of the system 30 can be carried out as follows:
The Controller of APi can observe its local state ${s}_{t}^{i}$ and based on that, take an action ${c}_{t}^{i}$*,* indicating which policy module is selected to calculate the resource allocation decision ${u}_{t}^{i}$ (e.g., the scheduled device). The signal ${c}_{t}^{i}$ can be transmitted to the other APs of the system 30. For example, there is an underlying mapping (which all APs 10 of the system 30 are aware of) specifying that if an APj≠i receives ${c}_{t}^{i}$ from APi, it knows how to react. APj may or may not send back to APi some of its first (local) information depending on the signal ${c}_{t}^{i}$ it received. Hence, there can be an agreement between the APs that if APj receives ${c}_{t}^{i}$*,* and ${c}_{t}^{i}$ implies that APi demands some specific amount of information from APj, then APj will provide this information immediately. From the viewpoint of APi, the data received by APj is denoted as ${d}_{t}^{j}$.

For instance, all APs j can send their corresponding actions to APi, potentially demanding some data from APi; then APi will send data to them as well. The above is visualized by steps 3a and 3b in FIG. 3, where the exchange is shown from the perspective of APi, omitting the actions ${c}_{t}^{i}$ received by APi.

Finally, for reduced signaling between the APs 10, it is possible to not send ${c}_{t}^{i}$ at every time step; an absence of ${c}_{t}^{i}$ could imply no change of ${c}_{t}^{i}$*.* This could informally translate as a message from APi to APj indicating: "as long as I do not send anything new, keep acting according to the latest ${c}_{t}^{i}$ you received from me".

Furthermore, after carrying out the calculated resource allocation decision, APi can receive (e.g., via its first interface) a reward feedback ${r}_{t}^{i}$ from at least one communication device 20 in its environment 31. In addition or alternatively, APi can also receive a reward feedback or an accumulation of reward feedbacks from at least one further AP 10 in the wireless communication network, e.g. from APj, via its second interface.

In the following, possible steps that can take place in a single timeslot t as experienced by APi are shown (these steps are also highlighted in FIG. 3):
- Step 1: APi observes the state of its connected devices 20, e.g. buffer size and channels of devices in its environment 31.
- Step 2: This information is passed to the controller 13 which outputs the action indicating the policy module (Policy 1 or Policy 2 in the example in FIG. 3) that should be executed.
- Steps 3a, 3b: Policy selection signal ${c}_{t}^{i}$ to APj, and optional reception (if needed) of ${d}_{t}^{j}$.
- Step 4: The controller 13 potentially receives information and forms the input of the policy m it selected. A resource allocation decision ${u}_{t}^{i}$ is finally produced.
- Step 5: When the resource allocation decisions ${u}_{t}^{i}$ of all APs 10 in the system 30 have been implemented, the environment 31 responds by returning a reward to APi and by making a transition to a new state ${s}_{t + 1}^{i}$*.* Conditioning the application on device uplink scheduling, the APi schedules a device 20 and the same is done by all APs 10 in the network. Potentially, the devices 20 scheduled by APj cause interference on the selected device 20, which will then have an effect on the observed reward of APi. Moreover, some new packets may arrive (at the devices 20) and the channel conditions may change; this concerns the new state observed by the AP.
- Step 6: Finally, APi sends its collected reward to the other APs 10; it also receives the respective rewards of the other APs 10. This is useful for the training of the controllers 13 of all APs, which is disclosed in the following.

### Training and optimization:

In the following, possible training and optimization routines for the APs 10, e.g. the APs 10 as shown in FIGs. 1-3, and their components, in particular their controller 13 and policy modules 14-1, 14-2, are presented:
In a first training routine, a controller 13 training can be carried out. For instance, the controller 10 of each AP may comprise a trainable neural network, e.g., a deep neural network (DNN), which can be trained by the controller by means of the first training approach. For instance, the trainable neural network can be a fully connected neural network (FCNN).

For example, in the first training routine the policy modules 14-1, 14-2 are decomposed from the controller 13. Essentially, in this case, it is assumed that the M policy modules are given, and that only the controller 13 of the AP is optimized. Therefore, when carrying out this training, the controller policies can be fixed for K episodes, each of length *L*. Then at every timestep *τ*, the controllers of the APs can exchange their collected rewards and can update their controller policies based on the following method.

Here, the controller policies may refer to the rules according to which a controller 13 selects the policy modules. When training/optimizing the controller 13, these controller policies of the controller 13 can be trained respectively optimized.

For instance, the controller 13 of APi stores a tuple with local observations, actions and rewards $\left\{{s}_{τ , i}^{k}, {c}_{τ , i}^{k}, {R}_{τ , i}^{k}\right\}$, where ${s}_{τ , i}^{k}$ is the observed state, ${c}_{τ , i}^{k}$ is the action taken and ${R}_{τ , i}^{k}$ is the reward received by the controller of APi at time *τ* of the k-th episode. Then, the controller of APi can:
- send its collected reward ${R}_{τ , i}^{k}$ to all APs in the network; and/or
- receive a reward from every other AP of the network.

After the controllers 13 have collected experience and it is time to update their controller policies (K episodes have been completed), a global reward and policy DNN update can be carried out, e.g., by each controller 13 in the system. This global reward and policy update can be carried by each controller 13 as follows:
- The controller 13 uses Monte-Carlo estimations to calculate a global rewards-to-go value ${\hat{R}}_{t}^{k} = {\sum }_{τ = t}^{L} {R}_{τ}^{k}$, where ${R}_{τ}^{k}$ is the ${\sum }_{a ∈ A} {R}_{τ , a}^{k}$ with A being the set of APs and ${R}_{τ , a}^{k}$ being the reward observed by APa at time *τ* of the k-th episode.
- A gradient with respect to parameters *θᵢ* (controller of APi) is computed as:
   ${g}^{i} = {K}^{- 1} {\sum }_{k} {L}^{- 1} {\sum }_{t} \left({\hat{R}}_{t}^{k}-{b}^{i}\left({s}_{t}^{i}\right)\right) {∇}_{{θ}^{i}} log \left({π}^{i}\left(\left.{u}_{t}^{i}\right|{s}_{t}^{i};{θ}^{i}\right)\right)$ is then used to update the weights of the controller neural network as follows: *θⁱ* ← *θⁱ + σ* · *gⁱ* (with *σ* being the learning rate).

The gradient *gⁱ* can be a gradient of a loss function to which the global rewards value ${\hat{R}}_{t}^{k}$ can be fed. The weights of the trainable neural network of the controller 13 can be adjusted based on the results of this loss function.

For example, due to the way the rewards-to-go values are computed, it is possible to avoid exchanging them in every timestep *τ* and instead exchange all of them in the form of a matrix (of size *K*×*L*). In this way, the controller 13 receiving these values knows which rewards occurred in which timeslot and which episode, at the end of the *K* episodes - hence only at the time when the gradients updates have to take place.

Alternatively or additionally to the above, the controller neural network could also be trained to adjust the rules, e.g. an algorithm, of at least one of the M selectable policy modules in certain time intervals.

In addition to the controller 13, also the M selectable policy modules 14-1, 14-2 can be trainable. For example, each of the selectable policy modules 14-1, 14-2 comprises a respective further trainable neural network.

Thus, in a second training routine, a joint training of the trainable controller 13 and the M trainable policy modules 14-1, 14-2 can be carried out. Thereby, the optimization of the components of an AP (controller and policy modules) is approached in a joint manner.

For instance, for each APi, one can define a loss over the parameters of the policy modules ${θ}_{{policy}_{1}}^{i} , {θ}_{{policy}_{2}}^{i}$ and of the controller ${θ}_{controller}^{i}$*.* Here, as an example, only policy modules Policy 1 and Policy 2 are considered. A possible way of calculating a joint loss is thereby the following: $\begin{matrix}{L}_{i} \left({θ}_{controller}^{i}, {θ}_{{policy}_{1}}^{i}, {θ}_{{policy}_{2}}^{i}\right) = p \left({θ}_{coltroller}^{i}\right) ⋅ {L}_{i} \left({θ}_{{policy}_{1}}^{i}\right) \\ + \left(1-p\left({θ}_{controller}^{i}\right)\right) ⋅ {L}_{i} \left({θ}_{{policy}_{2}}^{i}\right)\end{matrix}$

Hereby, $p \left({θ}_{controller}^{i}\right)$ is the probability with which the controller chooses Policy 1. The above approach can be generalized trivially to any number M of different policy modules (and sublosses).

The neural networks of the selectable policy modules and/or the controller neural network can be adjusted based on the joint loss.

Alternatively, the further trainable neural networks of the selectable policy modules 14-1, 14-2 can also be configured to be trained separately one by one, e.g., by calculating an individual loss for each further trainable neural network, and adjusting the respective further trainable neural network based on the individual loss.

Besides the above approaches and routines, there are other conceivable ways how deep RL (DRL) could be used for radio resource allocation. The common idea of these approaches is that each AP 10 learns its scheduling policy or radio resource allocation strategy based on observations from the interactions with the environment and from other APs. However, the possible alternatives listed in the following all suffer from several disadvantages:
- Independent RL: Here each AP 10 would run a single-agent RL algorithm (e.g., deep Q-learning) based on its own local observations. This has the advantage that there is no overhead for information exchange. The drawback is that the learned policy can lead to undesired behavior, e.g. non-convergence or collaboration failure.
- Centralized training with decentralized execution: Here the policies are distributed, i.e. the DNN of each agent (access point 10) takes actions based only on local observations (first information), but their training is done in a centralized manner by a central entity that has access to the whole system state. The purpose of the central entity is to stabilize the training process. After training is done, the updated DNN parameters that represent the new policies are sent to the APs. This approach has the main drawback that it is not scalable, as it requires a huge overhead to communicate the states and the updated policies between the central entity and the APs.
- Consensus-based algorithms: The common idea here is to remove the central entity in order to avoid the communication overhead, and to allow the agents to communicate through a sparse control network with only a subset of neighboring agents (APs 10), with the objective to reach a consensus over a learning variable and eventually over the policy to adopt. This approach still requires relatively high communication overhead for the exchange of states and DNN parameters among the APs 10, and it usually further requires strong assumptions for full state knowledge at each AP in order to have performance guarantees.

With the above approaches and routines, these drawbacks and disadvantages of these alternative resource allocation methods can be overcome.

### Example implementation:

In the following, a representative example for using the system 30 from FIG. 3 in a cellular network environment is shown.

In this example, the APs 10 (e.g., base stations) perform an uplink scheduling for their connected devices 20. Therefore, each AP 10 decides which of its associated devices 20 to schedule at each time slot. Regarding the traffic model, it is assumed that traffic ${B}_{t}^{k}$ (in bits) arrives at a device *k* at each slot *t* according to a random process. In detail, the following is thereby assumed for APi and its N connected devices:
The state of the connected devices can be denoted by: ${s}_{t}^{i} = \left\{\left({x}_{t}^{n}, {g}_{t}^{n , i}\right)\right\}$ for n ∈ *N*(*i*), wherein: ${x}_{t}^{n}$ is the amount of data bits currently of device n at time slot t, not yet delivered (queue length); and ${g}_{t}^{n , i}$ is the channel state between device n and AP i at time slot t.

The scheduling decision can be denoted by ${u}_{t}^{i} ∈ \left\{0,1,…,N\right\}$. Thereby, ${u}_{t}^{i}$ is the selected device to schedule at each time slot t. The choice *n* = 0 denotes the decision to schedule no device. Given the actions and the channel states of all APs at slot t, the number of transmitted bits sent by device i at slot t is calculated using the Shannon formula: ${μ}_{t}^{{u}_{t}^{i}} = {WT}_{s} {log}_{2} \left(1+\frac{{g}_{t}^{{u}_{t}^{i} , {i}_{P}}}{1 + ⋅ {\sum }_{j \neq i} {g}_{t}^{{u}_{t}^{j} , {i}_{P}}}\right) ,$ where W is the bandwidth used for transmission, *Tₛ* is the duration of each time slot and P is the uplink transmission power normalized by the receiver noise power. The number of bits remaining in the queue of device *k* in the beginning of the next slot is given by ${x}_{t + 1}^{k} = {\left[{x}_{t + 1}^{k}-{μ}_{t}^{k}\right]}^{+} + {B}_{t}^{k}$*.*

The policy modules (Policy 1, Policy 2) and the information exchange can be as follows: Policy 1 (No Sharing) is a reinforcement learning (RL)-based uplink scheduler which acts using only local observations, i.e., first information, and has been trained using local rewards (sees no rewards from neighbors, meaning other APs 10). Policy 2 (Sharing) is a RL-based uplink scheduler which acts based on local and neighboring AP states, i.e., on first and second information; it has been trained using global rewards (i.e., rewards from all APs 10). With regards to data exchange between APs, an AP 10 requests either nothing from the other APs (i.e., its neighbors) when using Policy 1 or requests their local state when using Policy 2.

The controller action can be as follows: When the controller 13 receives its local state, it takes action ${c}_{t}^{i}$ and sends it to all APs j of the network; this indicates which neighboring APs will need to send information back to APi.

The rewards can be as follows: The local reward for a controller at APi can be defined as *Rₜ* = - ∑_{*i*∈*D*(*i*)}*xᵢ* - *C* · *I*_{{*request*}}, where the first term corresponds to the negative sum of queues of the devices that are connected to APi, and the second term becomes C at the event when the AP requests the local state of some neighboring AP.

The policy modules used in the above example can be DNNs with a number of outputs that can match the number of devices that can be scheduled (plus one for the "no schedule" action). The controllers 13 can also be DNNs with two outputs, one for each available policy module that can be chosen.

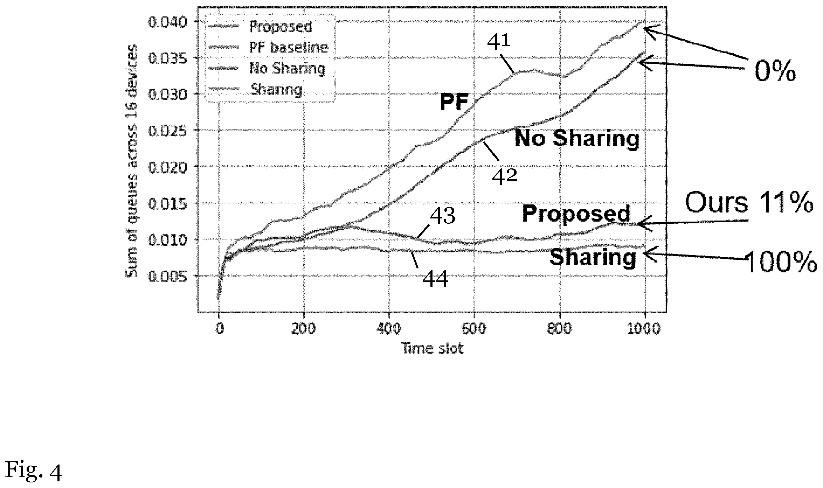

FIG. 4 shows a result of a performance evaluation according to an embodiment of this disclosure. In particular, the performance evaluation was carried out for a system 30 which is configured according to the above example implementation.

For the performance evaluation, simulations for a system of N=4 APs in a topology of a square were carried out. Thereby, the traffic follows a Poisson distribution with the same mean for all devices. There are K=20 devices placed at random within the coverage area and each device is associated with the closest AP. The policy modules are updated every epoch of 4 episodes and each episode consists of 1,000 time slots.

In order to evaluate the performance of the proposed approach 43 (i.e., the selection between the two policy modules Policy 1 and Policy 2), it is compared against the following scheduling algorithms:
- A proportional Fair (PF) scheduler 41: A PF scheduler is a standard uplink scheduler for cellular systems which aims to allocate fair service rates among devices. A PF scheduler only bases its radio resource allocation on local information. The PF scheduler is considered the golden baseline for performance comparisons. Notably, this solution typically does not perform well when there is high interaction among the APs due to interference.
- No sharing 42: An RL-based uplink scheduler which acts only on local observations (i.e., first information) always; and has been trained using local rewards (sees no rewards from neighbors).
- Sharing 44: An RL-based uplink scheduler which acts based on local and neighboring AP states (i.e., based on first and second information) always; it has been trained using global rewards.

Thus, the two policy modules (Policy 1 and Policy 2) also serve as separate baselines, because the "no sharing" algorithm 42 corresponds to always using Policy 1 and the "sharing" algorithm 44 corresponds to always using Policy 2. In this way, it can be evaluated if the controllers are able to select when one of the two policy modules is appropriate for the scheduling decision, depending on the environment conditions.

In principle, it should be expected that Policy 2 (sharing 44) does better than Policy 1 (no sharing 42) in terms of the network objective that is the sum of queue lengths across all devices. However, Policy 2 creates an additional communication cost and, thus, it is advantageous if the controllers avoid Policy 2 at least some percentage of the time, specifically when the conditions (state of queues) are convenient. In this case, they should opt for Policy 1 in order to avoid the unnecessary cost of communication.

In FIG. 4, the curves present the sum of queue lengths in the network during an episode of 1,000 timeslots. The percentages shown on the right express the percentage of time that an AP is requesting for information from its neighbors (i.e., second information). The following conclusions can be derived from this performance evaluation:
Regarding the baselines, in the chosen scenario, the policies PF 41 and "no sharing" 42 do not perform very well since they act greedily based on local state only (i.e., on first information only). These algorithms 41, 42 do not manage to hold the queue lengths stable, as we observe a steady increase. On the other hand, the "sharing" 44 baseline manages to hold the queue lengths stable.

The proposed policy 43, which is based on the possibility to switch between "sharing" and "no sharing", manages to achieve stable queues. The striking difference, however, is that it does so by exchanging information between APs only 11% of the time, thus achieving significant communication gains between the controllers, with respect to the "sharing" policy which exchanges such information 100% of the time.

Besides the scheduling algorithms presented above, alternative approaches are conceivable. For instance, other distributed algorithms that solve an optimization problem at each time slot of the system, usually with an objective of a weighted sum rate maximization, could be used. However, these algorithms often suffer from slow decision making, high information exchange and in fact, by myopically optimizing a per-slot objective, they often do not lead to the desired long-term behavior of the system.

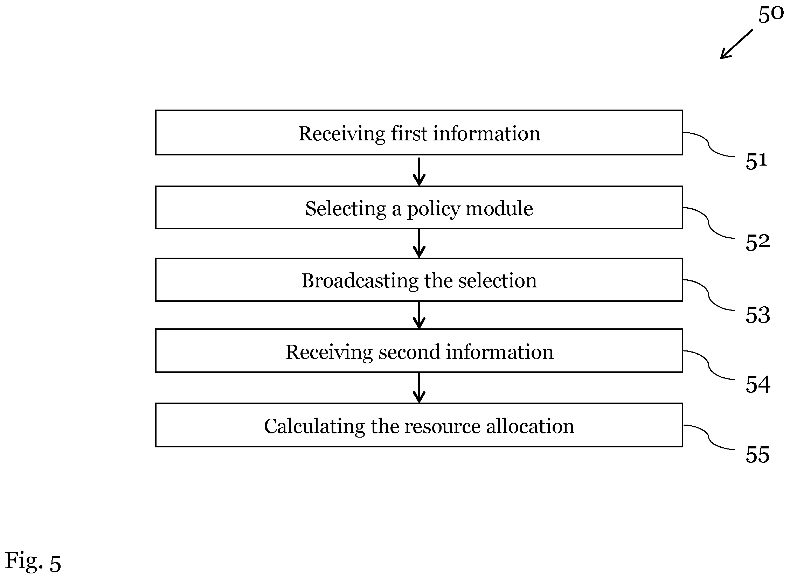

FIG. 5 shows a flow diagram of a method 50 of operating an access point 10 for a wireless communication network according to an embodiment of this disclosure.

The method 50 comprises the steps of: receiving 51 the first information from the at least one communication device 20 in the wireless communication network; selecting 52 a policy module from a number M of selectable policy modules 14-1, 14-2, each of the selectable policy modules being configured to calculate a resource allocation decision; broadcasting 53 a message on the policy module selection to at least one further access point 10 in the wireless communication network; and depending on the selected policy module; receiving 54 the second information from the at least one further access point in the wireless communication network. The M selectable policy modules comprise: a first policy module 14-1 which is configured to calculate the resource allocation decision based on the received first information without requiring the second information, and at least a second policy module 14-2 which is configured to calculate the resource allocation decision based on the received first information and on the received second information. The method further comprises calculating 55 the resource allocation decision with the selected policy module.

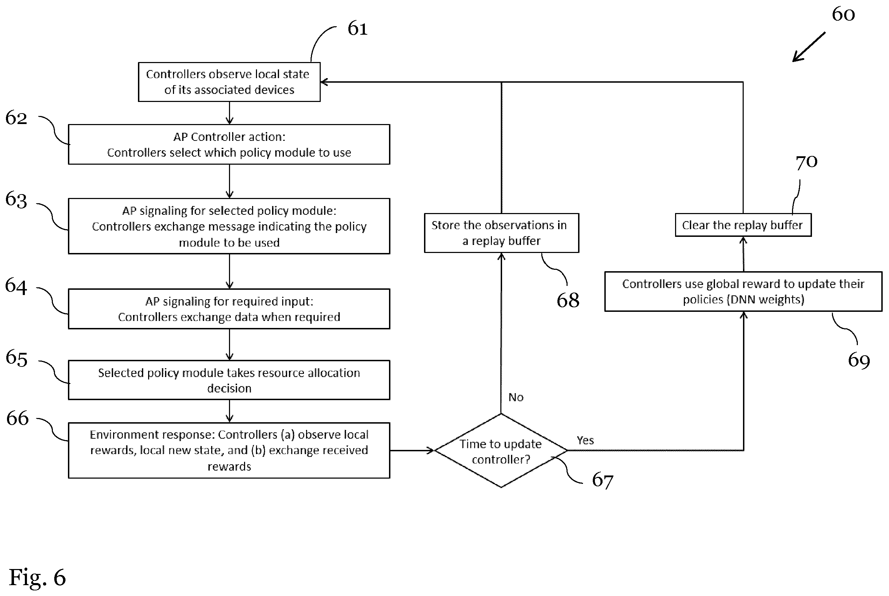

FIG. 6 shows a further flow diagram of a method 60 of operating an access point 10 for a wireless communication network according to an embodiment of this disclosure. The method 60 can be based on the method 50 shown in FIG. 5 and can expand said method 50.

The method 60 comprises the steps of: observing 61 the local sate of the communication devices 20 associated to an access point 10. Thereby, first information can be gathered. In a subsequent step 62, the controller 13 of the access point 10 selects a policy module, e.g., based on the local states. Then, the access point signals 63 the selected policy module to the other access points 10 of the wireless communication network. Thereby, the controllers 13 of the access points 10 can exchange messages indicating the policy module to be used. The access point can further signal 64 for required input for the selected policy module (e.g., second information). The controllers 13 of the access points 10 can exchange this data only when required. In a subsequent step 65, the selected policy module can calculate the resource allocation decision. This decision can be carried out by the access point 10.

After carrying out the resource allocation, the controller 13 of the access point can observe 66 a response of the environment. The response can comprise: local rewards and local new states (e.g., of communication devices 20) as well as rewards which are exchanged between the access points 10.

In a subsequent step 67, the access point 10 can decide if its controller 13 should be updated. For instance, the controller 13 is a trainable controller. If it decides not to update, the access point 10 can store its observations in a replay buffer (step. 68) and return to the initial step 61 of observing the local state of the devices 20. If the access point 10 decides to update the controller, this update can comprise using global rewards to adjust the controller DNN weights (step 69). After the update, the replay buffer can be cleared (step 70) and the access point can return the initial step 61 of observing the local state of the devices 20.

The methods 50, 60 can be carried out with any one of the access points 10, 10' shown in FIGS. 1-3.

The above approach offers the following advantages:
- The individual access points 10 can be adaptive to a dynamic environment of the wireless network. Each access point 10 can select the policy module 14-1, 14-2 that is the most suitable for the current network conditions. Thereby, unnecessary data exchange can be avoided and communication costs can be reduced.
- The learned controller policy can differ for each access point 10 and, thus, each access point 10 can adapt to the traffic and channel characteristics of its associated communication devices 20.
- The policies modules 14-1, 14-2 can be updated in such a way that the total reward accrued is statistically guaranteed to improve.
- The approach is distributed and can, therefore, be executed at each access point 10 concurrently.

In particular, by allowing each access point 10 of the system 30 to have different policy modules 14-1, 14-2, it is possible that some policy modules calculate the resource allocation based on local (first) information only while others calculate the resource allocation based on local and neighboring (first and second) information. This system architecture, as well as its accompanying signaling, allows for a more flexible communication between the access points 10.

The access points 10 can communicate according to a plurality of different policy modules 14-1, 14-2 while the controller can learn which of these modules is best for certain conditions. In this way, both a network-related performance metric and the communication between the access points 10 can be optimized.

The distributed radio resource allocation can thereby benefit from artificial intelligence (AI) and, specifically, from deep neural networks (DNNs), which can be implemented in the controller 13 of each access point 10. In this way, a decision-making framework for the distributed resource management, that adapts to the dynamic environment, can be achieved by combining the representation power of DNNs with Reinforcement Learning (RL), i.e., the area of machine learning where agents (e.g., the different APs of the mobile network) learn an optimal behavior based on their trial-and-error interaction with the environment in order to eventually maximize a long-term objective.

However, it is noted that directly applying "vanilla" RL methodologies may not deliver the desired results for the following two reasons. First, a simple RL algorithms (e.g. Q-Learning) can suffer from the curse of dimensionality, which limits their application to problems with a small number of states. Second, besides the dynamics of the environment (where a single RL agent would be able to face), each agent should also consider the behavior of other agents which also take actions, giving rise to what is called Multiple Agent RL (MARL). Intuitively, an AP (agent) should learn to predict the decisions of other APs, and based on that, take strategic decisions in response such that a global performance measure is maximized. The former (i.e., curse of dimensionality) can be bypassed using DNNs which are known to approximate RL functions; however, DNNs can be incapable of resolving the latter. When multiple agents act in a distributed scenario (e.g., each one decides its scheduled device), coordination and exchange of information between them can result in impressive performance improvements. Therefore, according to the above system 30 and methods 50, 60, the access points 10 can communicate between each other such that: (a) a long-term performance metric is maximized; (b) information exchange between the agents happens only if required.

The present disclosure has been described in conjunction with various embodiments as examples as well as implementations. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

Alternatively, the further trainable neural networks of the selectable policy modules 14-1, 14-2 can also be configured to be trained separately one by one, e.g., by calculating an individual loss for each further trainable neural network, and adjusting the respective further trainable neural network based on the individual loss.

Besides the above approaches and routines, there are other conceivable ways how deep RL (DRL) could be used for radio resource allocation. The common idea of these approaches is that each AP 10 learns its scheduling policy or radio resource allocation strategy based on observations from the interactions with the environment and from other APs. However, the possible alternatives listed in the following all suffer from several disadvantages:
- Independent RL: Here each AP 10 would run a single-agent RL algorithm (e.g., deep Q-learning) based on its own local observations. This has the advantage that there is no overhead for information exchange. The drawback is that the learned policy can lead to undesired behavior, e.g. non-convergence or collaboration failure.
- Centralized training with decentralized execution: Here the policies are distributed, i.e. the DNN of each agent (access point 10) takes actions based only on local observations (first information), but their training is done in a centralized manner by a central entity that has access to the whole system state. The purpose of the central entity is to stabilize the training process. After training is done, the updated DNN parameters that represent the new policies are sent to the APs. This approach has the main drawback that it is not scalable, as it requires a huge overhead to communicate the states and the updated policies between the central entity and the APs.
- Consensus-based algorithms: The common idea here is to remove the central entity in order to avoid the communication overhead, and to allow the agents to communicate through a sparse control network with only a subset of neighboring agents (APs 10), with the objective to reach a consensus over a learning variable and eventually over the policy to adopt. This approach still requires relatively high communication overhead for the exchange of states and DNN parameters among the APs 10, and it usually further requires strong assumptions for full state knowledge at each AP in order to have performance guarantees.

With the above approaches and routines, these drawbacks and disadvantages of these alternative resource allocation methods can be overcome.

### Example implementation:

In the following, a representative example for using the system 30 from FIG. 3 in a cellular network environment is shown.

In this example, the APs 10 (e.g., base stations) perform an uplink scheduling for their connected devices 20. Therefore, each AP 10 decides which of its associated devices 20 to schedule at each time slot. Regarding the traffic model, it is assumed that traffic ${B}_{t}^{k}$ (in bits) arrives at a device *k* at each slot *t* according to a random process. In detail, the following is thereby assumed for APi and its N connected devices:
The state of the connected devices can be denoted by: ${s}_{t}^{i} = \left\{\left({x}_{t}^{n}, {g}_{t}^{n , i}\right)\right\}$ for *n* ∈ *N*(*i*), wherein: ${x}_{t}^{n}$ is the amount of data bits currently of device *n* at time slot *t,* not yet delivered (queue length); and ${g}_{t}^{n , i}$ is the channel state between device n and AP i at time slot *t.*

The scheduling decision can be denoted by ${u}_{t}^{i} ∈ \left\{0,1,…,N\right\}$. Thereby, ${u}_{t}^{i}$ is the selected device to schedule at each time slot *t.* The choice *n* = 0 denotes the decision to schedule no device. Given the actions and the channel states of all APs at slot t, the number of transmitted bits sent by device i at slot t is calculated using the Shannon formula: ${μ}_{t}^{{u}_{t}^{i}} = {WT}_{s} {log}_{2} \left(1+\frac{{g}_{t}^{{u}_{t}^{i} , {i}_{P}}}{1 + ⋅ {\sum }_{j \neq i} {g}_{t}^{{u}_{t}^{j} , {i}_{P}}}\right) ,$ where W is the bandwidth used for transmission, *Tₛ* is the duration of each time slot and P is the uplink transmission power normalized by the receiver noise power. The number of bits remaining in the queue of device *k* in the beginning of the next slot is given by ${x}_{t + 1}^{k} = {\left[{x}_{t + 1}^{k}-{μ}_{t}^{k}\right]}^{+} + {B}_{t}^{k}$ *.*

The policy modules (Policy 1, Policy 2) and the information exchange can be as follows: Policy 1 (No Sharing) is a reinforcement learning (RL)-based uplink scheduler which acts using only local observations, i.e., first information, and has been trained using local rewards (sees no rewards from neighbors, meaning other APs 10). Policy 2 (Sharing) is a RL-based uplink scheduler which acts based on local and neighboring AP states, i.e., on first and second information; it has been trained using global rewards (i.e., rewards from all APs 10). With regards to data exchange between APs, an AP 10 requests either nothing from the other APs (i.e., its neighbors) when using Policy 1 or requests their local state when using Policy 2.

The controller action can be as follows: When the controller 13 receives its local state, it takes action ${c}_{t}^{i}$ and sends it to all APs j of the network; this indicates which neighboring APs will need to send information back to APi.

The rewards can be as follows: The local reward for a controller at APi can be defined as *Rₜ* = - ∑_{*i*∈*D*(*i*)}*xᵢ - C* · *I*_{{*request*}}, where the first term corresponds to the negative sum of queues of the devices that are connected to APi, and the second term becomes C at the event when the AP requests the local state of some neighboring AP.

The policy modules used in the above example can be DNNs with a number of outputs that can match the number of devices that can be scheduled (plus one for the "no schedule" action). The controllers 13 can also be DNNs with two outputs, one for each available policy module that can be chosen.

FIG. 4 shows a result of a performance evaluation according to an embodiment of this disclosure. In particular, the performance evaluation was carried out for a system 30 which is configured according to the above example implementation.

For the performance evaluation, simulations for a system of N=4 APs in a topology of a square were carried out. Thereby, the traffic follows a Poisson distribution with the same mean for all devices. There are K=20 devices placed at random within the coverage area and each device is associated with the closest AP. The policy modules are updated every epoch of 4 episodes and each episode consists of 1,000 time slots.

In order to evaluate the performance of the proposed approach 43 (i.e., the selection between the two policy modules Policy 1 and Policy 2), it is compared against the following scheduling algorithms:
- A proportional Fair (PF) scheduler 41: A PF scheduler is a standard uplink scheduler for cellular systems which aims to allocate fair service rates among devices. A PF scheduler only bases its radio resource allocation on local information. The PF scheduler is considered the golden baseline for performance comparisons. Notably, this solution typically does not perform well when there is high interaction among the APs due to interference.
- No sharing 42: An RL-based uplink scheduler which acts only on local observations (i.e., first information) always; and has been trained using local rewards (sees no rewards from neighbors).
- Sharing 44: An RL-based uplink scheduler which acts based on local and neighboring AP states (i.e., based on first and second information) always; it has been trained using global rewards.

Thus, the two policy modules (Policy 1 and Policy 2) also serve as separate baselines, because the "no sharing" algorithm 42 corresponds to always using Policy 1 and the "sharing" algorithm 44 corresponds to always using Policy 2. In this way, it can be evaluated if the controllers are able to select when one of the two policy modules is appropriate for the scheduling decision, depending on the environment conditions.

In principle, it should be expected that Policy 2 (sharing 44) does better than Policy 1 (no sharing 42) in terms of the network objective that is the sum of queue lengths across all devices. However, Policy 2 creates an additional communication cost and, thus, it is advantageous if the controllers avoid Policy 2 at least some percentage of the time, specifically when the conditions (state of queues) are convenient. In this case, they should opt for Policy 1 in order to avoid the unnecessary cost of communication.

In FIG. 4, the curves present the sum of queue lengths in the network during an episode of 1,000 timeslots. The percentages shown on the right express the percentage of time that an AP is requesting for information from its neighbors (i.e., second information). The following conclusions can be derived from this performance evaluation:
Regarding the baselines, in the chosen scenario, the policies PF 41 and "no sharing" 42 do not perform very well since they act greedily based on local state only (i.e., on first information only). These algorithms 41, 42 do not manage to hold the queue lengths stable, as we observe a steady increase. On the other hand, the "sharing" 44 baseline manages to hold the queue lengths stable.

The proposed policy 43, which is based on the possibility to switch between "sharing" and "no sharing", manages to achieve stable queues. The striking difference, however, is that it does so by exchanging information between APs only 11% of the time, thus achieving significant communication gains between the controllers, with respect to the "sharing" policy which exchanges such information 100% of the time.

Besides the scheduling algorithms presented above, alternative approaches are conceivable. For instance, other distributed algorithms that solve an optimization problem at each time slot of the system, usually with an objective of a weighted sum rate maximization, could be used. However, these algorithms often suffer from slow decision making, high information exchange and in fact, by myopically optimizing a per-slot objective, they often do not lead to the desired long-term behavior of the system.

FIG. 5 shows a flow diagram of a method 50 of operating an access point 10 for a wireless communication network according to an embodiment of this disclosure.

The method 50 comprises the steps of: receiving 51 the first information from the at least one communication device 20 in the wireless communication network; selecting 52 a policy module from a number M of selectable policy modules 14-1, 14-2, each of the selectable policy modules being configured to calculate a resource allocation decision; broadcasting 53 a message on the policy module selection to at least one further access point 10 in the wireless communication network; and depending on the selected policy module; receiving 54 the second information from the at least one further access point in the wireless communication network. The M selectable policy modules comprise: a first policy module 14-1 which is configured to calculate the resource allocation decision based on the received first information without requiring the second information, and at least a second policy module 14-2 which is configured to calculate the resource allocation decision based on the received first information and on the received second information. The method further comprises calculating 55 the resource allocation decision with the selected policy module.

FIG. 6 shows a further flow diagram of a method 60 of operating an access point 10 for a wireless communication network according to an embodiment of this disclosure. The method 60 can be based on the method 50 shown in FIG. 5 and can expand said method 50.

The method 60 comprises the steps of: observing 61 the local sate of the communication devices 20 associated to an access point 10. Thereby, first information can be gathered. In a subsequent step 62, the controller 13 of the access point 10 selects a policy module, e.g., based on the local states. Then, the access point signals 63 the selected policy module to the other access points 10 of the wireless communication network. Thereby, the controllers 13 of the access points 10 can exchange messages indicating the policy module to be used. The access point can further signal 64 for required input for the selected policy module (e.g., second information). The controllers 13 of the access points 10 can exchange this data only when required. In a subsequent step 65, the selected policy module can calculate the resource allocation decision. This decision can be carried out by the access point 10.

After carrying out the resource allocation, the controller 13 of the access point can observe 66 a response of the environment. The response can comprise: local rewards and local new states (e.g., of communication devices 20) as well as rewards which are exchanged between the access points 10.

In a subsequent step 67, the access point 10 can decide if its controller 13 should be updated. For instance, the controller 13 is a trainable controller. If it decides not to update, the access point 10 can store its observations in a replay buffer (step. 68) and return to the initial step 61 of observing the local state of the devices 20. If the access point 10 decides to update the controller, this update can comprise using global rewards to adjust the controller DNN weights (step 69). After the update, the replay buffer can be cleared (step 70) and the access point can return the initial step 61 of observing the local state of the devices 20.

The methods 50, 60 can be carried out with any one of the access points 10, 10' shown in FIGS. 1-3.

The above approach offers the following advantages:
- The individual access points 10 can be adaptive to a dynamic environment of the wireless network. Each access point 10 can select the policy module 14-1, 14-2 that is the most suitable for the current network conditions. Thereby, unnecessary data exchange can be avoided and communication costs can be reduced.
- The learned controller policy can differ for each access point 10 and, thus, each access point 10 can adapt to the traffic and channel characteristics of its associated communication devices 20.
- The policies modules 14-1, 14-2 can be updated in such a way that the total reward accrued is statistically guaranteed to improve.
- The approach is distributed and can, therefore, be executed at each access point 10 concurrently.

In particular, by allowing each access point 10 of the system 30 to have different policy modules 14-1, 14-2, it is possible that some policy modules calculate the resource allocation based on local (first) information only while others calculate the resource allocation based on local and neighboring (first and second) information. This system architecture, as well as its accompanying signaling, allows for a more flexible communication between the access points 10.

The access points 10 can communicate according to a plurality of different policy modules 14-1, 14-2 while the controller can learn which of these modules is best for certain conditions. In this way, both a network-related performance metric and the communication between the access points 10 can be optimized.

The distributed radio resource allocation can thereby benefit from artificial intelligence (AI) and, specifically, from deep neural networks (DNNs), which can be implemented in the controller 13 of each access point 10. In this way, a decision-making framework for the distributed resource management, that adapts to the dynamic environment, can be achieved by combining the representation power of DNNs with Reinforcement Learning (RL), i.e., the area of machine learning where agents (e.g., the different APs of the mobile network) learn an optimal behavior based on their trial-and-error interaction with the environment in order to eventually maximize a long-term objective.

However, it is noted that directly applying "vanilla" RL methodologies may not deliver the desired results for the following two reasons. First, a simple RL algorithms (e.g. Q-Learning) can suffer from the curse of dimensionality, which limits their application to problems with a small number of states. Second, besides the dynamics of the environment (where a single RL agent would be able to face), each agent should also consider the behavior of other agents which also take actions, giving rise to what is called Multiple Agent RL (MARL). Intuitively, an AP (agent) should learn to predict the decisions of other APs, and based on that, take strategic decisions in response such that a global performance measure is maximized. The former (i.e., curse of dimensionality) can be bypassed using DNNs which are known to approximate RL functions; however, DNNs can be incapable of resolving the latter. When multiple agents act in a distributed scenario (e.g., each one decides its scheduled device), coordination and exchange of information between them can result in impressive performance improvements. Therefore, according to the above system 30 and methods 50, 60, the access points 10 can communicate between each other such that: (a) a long-term performance metric is maximized; (b) information exchange between the agents happens only if required.

The present disclosure has been described in conjunction with various embodiments as examples as well as implementations. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. An access point (10) for a wireless communication network, the access point (10) comprising:
a first interface (11) configured to receive first information from at least one communication device (20) in the wireless communication network;
a second interface (12) configured to receive second information from at least one further access point (10') in the wireless communication network;
a number M of selectable policy modules (14-1, 14-2), each of the selectable policy modules (14-1, 14-2) being configured to calculate a resource allocation decision, wherein the M selectable policy modules comprise:
- a first policy module (14-1) which is configured to calculate the resource allocation decision based on the received first information without requiring the second information, and
- at least a second policy module (14-2) which is configured to calculate the resource allocation decision based on the received first information and on the received second information,
a controller (13) which is configured to select a policy module from the M selectable policy modules (14-1, 14-2) to calculate the resource allocation decision.

2. The access point (10) of claim 1,
wherein the controller (13) is configured to select the policy module from the M selectable policy modules (14-1, 14-2) based on the received first information.

3. The access point (10) of claim 1 or 2,
wherein the controller (13) is configured to broadcast a message with the selection of the policy module to one, more or all further access points (10') in the wireless communication network.

4. The access point (10) of any one of the preceding claims,
wherein the second information comprises a response by the at least one further access point (10') in the wireless communication network to the broadcasted message.

5. The access point (10) of any one of the preceding claims,
wherein the second interface (12) is further configured to receive a broadcasted message on a selection of a policy module from at least one further access point (10') in the wireless communication network.

6. The access point (10) of claim 5,
wherein the access point (10) is configured to send further information back to the at least one further access point (10') in response to the receipt of the broadcasted message.

7. The access point (10) of any one of the preceding claims,
wherein the controller (13) is a trainable controller which is trainable with regard to the selection of the policy module.

8. The access point (10) of any one of the preceding claims,
wherein after carrying out the calculated resource allocation decision,
- the first interface (11) is configured to receive a reward feedback from at least one communication device (20) in the wireless communication network, and/or
- the second interface (12) is configured to receive a reward feedback or an accumulation of reward feedbacks from at least one further access point (10') in the wireless communication network.

9. The access point (10) of any one of the preceding claims,
wherein the controller (13) comprises a trainable neural network.

10. The access point (10) of claims 8 and 9,
wherein the controller (13) is configured to train the trainable neural network by:
- calculating a global reward based on the reward feedback from the at least one communication device and the reward feedback(s) from the at least one further access point, for example, using a Monte-Carlo simulation,
- feeding the global reward to a loss function, and
- adjusting the trainable neural network based on the result of the loss function.

11. The access point (10) of any one of the preceding claims,
wherein each of the selectable policy modules (14-1, 14-2) comprises a set of rules, for example, an algorithm, which is stored in a memory of the access point.

12. The access point (10) of claim 11,
wherein the controller (13), for example a neural network of the controller (13), is further configured to adjust the rules of at least one of the M selectable policy modules (14-1, 14-2) in certain time intervals.

13. The access point (10) of any one of the preceding claims,
wherein each of the selectable policy modules (14-1, 14-2) comprises a respective further trainable neural network.

14. A system (30) comprising at least two access points (10) of any one of the preceding claims.

15. A method (50) of operating an access point (10) for a wireless communication network, the method (50) comprising the steps of:
receiving (51) first information from at least one communication device (20) in the wireless communication network;
selecting (52) a policy module from a number M of selectable policy modules (14-1, 14-2), each of the selectable policy modules (14-1, 14-2) being configured to calculate a resource allocation decision;
broadcasting (53) a message on the policy module selection to at least one further access point (10') in the wireless communication network;
depending on the selected policy module, receiving (54) second information from the at least one further access point (10');
wherein the M selectable policy modules comprise:
- a first policy module (14-1) which is configured to calculate the resource allocation decision based on the received first information without requiring the second information, and
- at least a second policy module (14-2) which is configured to calculate the resource allocation decision based on the received first information and on the received second information; and calculating (55) the resource allocation decision with the selected policy module.

## Patentansprüche

1. Zugangspunkt (10) für ein drahtloses Kommunikationsnetzwerk, wobei der Zugangspunkt (10) Folgendes umfasst:
eine erste Schnittstelle (11), die dazu konfiguriert ist, erste Informationen von mindestens einer Kommunikationsvorrichtung (20) in dem drahtlosen Kommunikationsnetzwerk zu empfangen;
eine zweite Schnittstelle (12), die dazu konfiguriert ist, zweite Informationen von mindestens einem weiteren Zugangspunkt (10') in dem drahtlosen Kommunikationsnetzwerk zu empfangen; eine Anzahl M von auswählbaren Richtlinienmodulen (14-1, 14-2), wobei jedes der auswählbaren Richtlinienmodule (14-1, 14-2) dazu konfiguriert ist, eine Ressourcenzuweisungsentscheidung zu berechnen, wobei die M auswählbaren Richtlinienmodule Folgendes umfassen:
- ein erstes Richtlinienmodul (14-1), welches dazu konfiguriert ist, die Ressourcenzuweisungsentscheidung basierend auf den ersten empfangenen Informationen zu berechnen, ohne die zweiten Informationen zu benötigen, und
- mindestens ein zweites Richtlinienmodul (14-2), welches dazu konfiguriert ist, die Ressourcenzuweisungsentscheidung basierend auf den ersten empfangenen Informationen und auf den zweiten empfangenen Informationen zu berechnen;
eine Steuerung (13), welche dazu konfiguriert ist, ein Richtlinienmodul aus den M auswählbaren Richtlinienmodulen (14-1, 14-2) auszuwählen, um die Ressourcenzuweisungsentscheidung zu berechnen.

2. Zugangspunkt (10) nach Anspruch 1,
wobei die Steuerung (13) dazu konfiguriert ist, das Richtlinienmodul aus den M auswählbaren Richtlinienmodulen (14-1, 14-2) basierend auf den ersten empfangenen Informationen auszuwählen.

3. Zugangspunkt (10) nach Anspruch 1 oder 2,
wobei die Steuerung (13) dazu konfiguriert ist, eine Nachricht mit der Auswahl des Richtlinienmoduls an einen, mehrere oder alle weiteren Zugangspunkte (10') in dem drahtlosen Kommunikationsnetzwerk zu senden.

4. Zugangspunkt (10) nach einem der vorhergehenden Ansprüche, wobei die zweiten Informationen eine Antwort durch den mindestens einen weiteren Zugangspunkt (10') in dem drahtlosen Kommunikationsnetzwerk auf die gesendete Nachricht umfassen.

5. Zugangspunkt (10) nach einem der vorhergehenden Ansprüche, wobei die zweite Schnittstelle (12) ferner dazu konfiguriert ist, eine gesendete Nachricht auf einer Auswahl eines Richtlinienmoduls aus mindestens einem weiteren Zugangspunkt (10') in dem drahtlosen Kommunikationsnetzwerk zu empfangen.

6. Zugangspunkt (10) nach Anspruch 5,
wobei der Zugangspunkt (10) dazu konfiguriert ist, als Reaktion auf den Empfang der gesendeten Nachricht weitere Informationen an den mindestens einen weiteren Zugangspunkt (10') zurückzusenden.

7. Zugangspunkt (10) nach einem der vorhergehenden Ansprüche, wobei die Steuerung (13) eine trainierbare Steuerung ist, welche in Bezug auf die Auswahl des Richtlinienmoduls trainierbar ist.

8. Zugangspunkt (10) nach einem der vorhergehenden Ansprüche, wobei nach dem Durchführen der berechneten Ressourcenzuweisungsentscheidung,
- die erste Schnittstelle (11) dazu konfiguriert ist, ein Belohnungsfeedback von mindestens einer Kommunikationsvorrichtung (20) in dem drahtlosen Kommunikationsnetzwerk zu empfangen, und/oder
- die zweite Schnittstelle (12) dazu konfiguriert ist, ein Belohnungsfeedback oder eine Ansammlung von Belohnungsfeedbacks von mindestens einem weiteren Zugangspunkt (10') in dem drahtlosen Kommunikationsnetzwerk zu empfangen.

9. Zugangspunkt (10) nach einem der vorhergehenden Ansprüche, wobei die Steuerung (13) ein trainierbares neuronales Netzwerk umfasst.

10. Zugangspunkt (10) nach Anspruch 8 und 9,
wobei die Steuerung (13) dazu konfiguriert ist, das trainierbare neuronale Netzwerk wir folgt zu trainieren:
- Berechnen einer globalen Belohnung basierend auf dem Belohnungsfeedback aus der mindestens einen Kommunikationsvorrichtung und dem/den Belohnungsfeedback(s) aus dem mindestens einen weiteren Zugangspunkt, z. B. unter Verwendung einer Monte-Carlo-Simulation,
- Einspeisen der globalen Belohnung in eine Verlustfunktion, und
- Einstellen des trainierbaren neuronalen Netzwerks basierend auf dem Ergebnis der Verlustfunktion.

11. Zugangspunkt (10) nach einem der vorhergehenden Ansprüche, wobei jedes der auswählbaren Richtlinienmodule (14-1, 14-2) einen Regelsatz, z. B. einen Algorithmus, umfasst, welcher in einem Speicher des Zugangspunkts gespeichert ist.

12. Zugangspunkt (10) nach Anspruch 11,
wobei die Steuerung (13), z. B. ein neuronales Netzwerk der Steuerung (13), ferner dazu konfiguriert ist, die Regeln von mindestens einem der M auswählbaren Richtlinienmodule (14-1, 14-2) in bestimmten Zeitintervallen einzustellen.

13. Zugangspunkt (10) nach einem der vorhergehenden Ansprüche, wobei jedes der auswählbaren Richtlinienmodule (14-1, 14-2) ein jeweiliges weiteres trainierbares neuronales Netzwerk umfasst.

14. System (30), umfassend mindestens zwei Zugangspunkte (10) nach einem der vorhergehenden Ansprüche.

15. Verfahren (50) zum Betreiben eines Zugangspunkts (10) für ein drahtloses Kommunikationsnetzwerk, wobei das Verfahren (50) die folgenden Schritte umfasst:
Empfangen (51) erster Informationen aus mindestens einer Kommunikationsvorrichtung (20) in dem drahtlosen Kommunikationsnetzwerk;
Auswählen (52) eines Richtlinienmoduls aus einer Anzahl M von auswählbaren Richtlinienmodulen (14-1, 14-2), wobei jedes der auswählbaren Richtlinienmodule (14-1, 14-2) dazu konfiguriert ist, eine Ressourcenzuweisungsentscheidung zu berechnen;
Senden (53) einer Nachricht auf der Richtlinienmodulauswahl an mindestens einen weiteren Zugangspunkt (10') in dem drahtlosen Kommunikationsnetzwerk;
in Abhängigkeit von dem ausgewählten Richtlinienmodul, Empfangen (54) zweiter Informationen aus mindestens einem weiteren Zugangspunkt (10');
wobei die M auswählbaren Richtlinienmodule Folgendes umfassen:
- ein erstes Richtlinienmodul (14-1), welches dazu konfiguriert ist, die Ressourcenzuweisungsentscheidung basierend auf den ersten empfangenen Informationen zu berechnen, ohne die zweiten Informationen zu benötigen, und
- mindestens ein zweites Richtlinienmodul (14-2), welches dazu konfiguriert ist, die Ressourcenzuweisungsentscheidung basierend auf den ersten empfangenen Informationen und auf den zweiten empfangenen Informationen zu berechnen; und
Berechnen (55) der Ressourcenzuweisungsentscheidung mit dem ausgewählten Richtlinienmodul.

## Revendications

1. Point d'accès (10) pour un réseau de communication sans fil, le point d'accès (10) comprenant :
une première interface (11) configurée pour recevoir de premières informations en provenance d'au moins un dispositif de communication (20) dans le réseau de communication sans fil ;
une seconde interface (12) configurée pour recevoir de secondes informations en provenance d'au moins un point d'accès supplémentaire (10') dans le réseau de communication sans fil ;
un nombre M de modules de politique sélectionnables (14-1, 14-2), chacun des modules de politique sélectionnables (14-1, 14-2) étant configuré pour calculer une décision d'allocation de ressources, dans lequel les M modules de politique sélectionnables comprennent :
- un premier module de politique (14-1) qui est configuré pour calculer la décision d'allocation de ressources sur la base des premières informations reçues, sans nécessiter les secondes informations, et
- au moins un second module de politique (14-2) qui est configuré pour calculer la décision d'allocation de ressources sur la base des premières informations reçues et des secondes informations reçues ;
un dispositif de commande (13) qui est configuré pour sélectionner un module de politique à partir des M modules de politique sélectionnables (14-1, 14-2) pour calculer la décision d'allocation de ressources.

2. Point d'accès (10) selon la revendication 1,
dans lequel le dispositif de commande (13) est configuré pour sélectionner le module de politique à partir des M modules de politique sélectionnables (14-1, 14-2) sur la base des premières informations reçues.

3. Point d'accès (10) selon la revendication 1 ou 2,
dans lequel le dispositif de commande (13) est configuré pour diffuser un message avec la sélection du module de politique à un, plusieurs ou tous les points d'accès supplémentaires (10') dans le réseau de communication sans fil.

4. Point d'accès (10) selon l'une quelconque des revendications précédentes,
dans lequel les secondes informations comprennent une réponse, de l'au moins un point d'accès supplémentaire (10') dans le réseau de communication sans fil, au message diffusé.

5. Point d'accès (10) selon l'une quelconque des revendications précédentes,
dans lequel la seconde interface (12) est en outre configurée pour recevoir un message diffusé sur une sélection d'un module de politique à partir d'au moins un point d'accès supplémentaire (10') dans le réseau de communication sans fil.

6. Point d'accès (10) selon la revendication 5,
dans lequel le point d'accès (10) est configuré pour renvoyer des informations supplémentaires à l'au moins un point d'accès supplémentaire (10') en réponse à la réception du message diffusé.

7. Point d'accès (10) selon l'une quelconque des revendications précédentes,
dans lequel le dispositif de commande (13) est un dispositif de commande entraînable qui est entraînable en ce qui concerne la sélection du module de politique.

8. Point d'accès (10) selon l'une quelconque des revendications précédentes,
dans lequel après avoir effectué la décision d'allocation de ressources calculée,
- la première interface (11) est configurée pour recevoir une rétroaction de récompense en provenance d'au moins un dispositif de communication (20) dans le réseau de communication sans fil, et/ou
- la seconde interface (12) est configurée pour recevoir une rétroaction de récompense ou une accumulation de rétroactions de récompense en provenance d'au moins un point d'accès supplémentaire (10') dans le réseau de communication sans fil.

9. Point d'accès (10) selon l'une quelconque des revendications précédentes,
dans lequel le dispositif de commande (13) comprend un réseau neuronal entraînable.

10. Point d'accès (10) selon les revendications 8 et 9,
dans lequel le dispositif de commande (13) est configuré pour entraîner le réseau neuronal entraînable par :
- le calcul d'une récompense globale sur la base de la rétroaction de récompense provenant de l'au moins un dispositif de communication et des une ou plusieurs rétroactions de récompense provenant de l'au moins un point d'accès supplémentaire, par exemple, à l'aide d'une simulation de Monte-Carlo,
- l'intégration de la récompense globale à une fonction de perte, et
- l'ajustement du réseau neuronal entraînable sur la base du résultat de la fonction de perte.

11. Point d'accès (10) selon l'une quelconque des revendications précédentes,
dans lequel chacun des modules de politique sélectionnables (14-1, 14-2) comprend un ensemble de règles, par exemple un algorithme, qui est stocké dans une mémoire du point d'accès.

12. Point d'accès (10) selon la revendication 11,
dans lequel le dispositif de commande (13), par exemple un réseau neuronal du dispositif de commande (13), est en outre configuré pour ajuster les règles d'au moins l'un des M modules de politique sélectionnables (14-1, 14-2) dans certains intervalles de temps.

13. Point d'accès (10) selon l'une quelconque des revendications précédentes,
dans lequel chacun des modules de politique sélectionnables (14-1, 14-2) comprend un réseau neuronal entraînable supplémentaire respectif.

14. Système (30) comprenant au moins deux points d'accès (10) selon l'une quelconque des revendications précédentes.

15. Procédé (50) de fonctionnement d'un point d'accès (10) pour un réseau de communication sans fil, le procédé (50) comprenant les étapes :
de réception (51) de premières informations en provenance d'au moins un dispositif de communication (20) dans le réseau de communication sans fil ;
de sélection (52) d'un module de politique à partir d'un nombre M de modules de politique sélectionnables (14-1, 14-2), chacun des modules de politique sélectionnables (14-1, 14-2) étant configuré pour calculer une décision d'allocation de ressources ;
de diffusion (53) d'un message sur la sélection de module de politique à au moins un point d'accès supplémentaire (10') dans le réseau de communication sans fil ;
en fonction du module de politique sélectionné, de réception (54) de secondes informations en provenance de l'au moins un point d'accès supplémentaire (10') ;
dans lequel les M modules de politique sélectionnables comprennent :
- un premier module de politique (14-1) qui est configuré pour calculer la décision d'allocation de ressources sur la base des premières informations reçues, sans nécessiter les secondes informations, et
- au moins un second module de politique (14-2) qui est configuré pour calculer la décision d'allocation de ressources sur la base des premières informations reçues et des secondes informations reçues ; et
le calcul (55) de la décision d'allocation de ressources avec le module de politique sélectionné.
